Europäisches Patentamt

European Patent Office

Office européen des brevets

(19)

(11) Publication number: **0 101 119**
**A1**

(12) **EUROPEAN PATENT APPLICATION**

(21) Application number: **83201105.0**

(22) Date of filing: **26.07.83**

(51) Int. Cl.³: **G 01 F 1/78**
**G 01 F 1/68, G 01 K 17/16**

(30) Priority: **02.08.82 NL 8203080**

(43) Date of publication of application:
**22.02.84 Bulletin 84/8**

(84) Designated Contracting States:
**AT BE CH DE FR GB IT LI LU NL SE**

(71) Applicant: **CC Controls B.V.**
**No. 3, Mercuriusstraat**
**NL-6541 BM Nijmegen(NL)**

(72) Inventor: **Bertels, Augustinus Wilhelmus Maria**
**Van Westrheenelaan 10**
**NL-6815 AC Arnhem(NL)**

(74) Representative: **Schumann, Bernard Herman**
**Johan et al,**
**OCTROOIBUREAU ARNOLD & SIEDSMA Sweelinckplein**
**1**
**NL-2517 GK The Hague(NL)**

(54) **Method and device for measuring the flow of a physical quantity.**

(57) The invention relates to a method of measuring the stream of a physical magnitude correlating with the mass stream of a medium flowing through a duct, for example, the mass stream itself or the heat stream given off by said medium to a consumer station or derived therefrom.

The invention has for its object to provide a method and a device of the kind set forth operating with excellent accuracy and reproduceability for long and short periods within a very large range of values.

The invention proposes to measure the mass stream of the medium by arranging in the medium a streamline element, by imparting to at least one predetermined, thermally active part of the wall of said streamline element a predetermined temperature, which may vary along said wall part, by measuring the temperature of the medium in the thermally undisturbed medium, for example, upstream with respect to the streamline element, by measuring the temperature of the medium affected by said wall part in thermal respect such as the heat conduction capacity, the density, the viscosity and the specific heat and by assessing the mass stream from said temperatures and the physical properties of the medium.

FIG. 2

-1-
Short title: Method and device for measuring the stream of
a physical magnitude.
-------------------------------------------------------------------

The invention relates to a method of measuring
the stream of a physical magnitude correlating with the mass
stream of a medium flowing through a duct, for example, the
mass stream itself or the heat stream given off by said medium
to a consumer station or derived therefrom.

Such a method as well as a device for carrying
out the same is known in many designs. The problem involved
in the known methods and devices is that an accurate assessment
requires an expensive device, whereas cheaper devices, for
example, for domestic use on a large scale exhibit a non-
acceptable measuring inaccuracy.

The invention has for its object to provide a
method and a device of the kind set forth operating with
excellent accuracy and reproduceability for long and short
periods within a very large range of values.

The invention has furthermore for its object
to design a device so that it can be cheaply manufactured
in mass production. A further object of the invention is to
design a device in a manner such that it can readily be
mounted on an existing duct or, as the case may be, on a
combination of an inlet duct and an outlet duct.

The invention proposes to measure the mass stream of the medium by arranging in the medium a streamline element, by imparting to at least one predetermined, thermally active part of the wall of said streamline element a predetermined temperature, which may vary along said wall part, by measuring the temperature of the medium in the thermally undisturbed medium, for example, upstream with respect to the streamline element, by measuring the temperature of the medium affected by said wall part in thermal respect such as the heat conduction capacity, the density, the viscosity and the specific heat and by assessing the mass stream from said temperatures and the physical properties of the medium.

By imparting said varying or non-varying temperature to the wall of the streamline element it is ensured that locally a thermal boundary layer is formed, which affects the temperature of the medium flowing past said wall in a sense such that with a low speed of flow the temperature variation is relatively large and with a higher flow rate of the medium the temperature variation will be relatively small. Therefore, the difference between the temperature of the undisturbed medium and the temperature in the thermally affected medium is a measure for the mass stream of said medium.

According to the invention the heat stream given off by a medium flowing through a duct to a consumer station included in said duct or derived therefrom can be assessed by measuring the mass stream in the manner described above, after the temperature difference of the medium upstream and, respectively, downstream of the consumer station is measured and subsequently the heat stream is determined by the mass stream, the temperature difference and the physical properties of the medium.

Advantageously the streamline element may form part of a heat pipe activated by a heat source or a heat pit, since such a heat pipe can be readily manufactured in mass production and has excellently controllable characteristics which are stable for short and longer terms.

For assessing a heat stream as described above it is advantageous to use the medium upstream of the consumer station. In this case it is advantageous to use a method which is characterized in that the temperature is assessed upstream of the consumer station by arranging in the medium upstream of the consumer station a streamline element identical to the first streamline element with a second wall part forming part of the heat pipe and being identical to the first-mentioned wall part, said second wall part serving to transfer heat between the medium and the heat pipe and having a heat transfer coefficient equal to the heat transfer coefficient of the first wall part, in that the temperature difference across the first wall part is measured, the temperature difference of the medium upstream and downstream of the consumer station is measured and the ratio between the two temperature differences is assessed, which ratio is representative of the power absorbed or given off by the consumer station. In particular, by using a heat pipe, as will be described more fully hereinafter, a very simple logarithmically linear relationship is obtained in this case in accordance with the formula

$$P = A \left( \frac{\Delta T_1}{\Delta T_2} \right)^B$$

wherein P = the power in Watt,
A = a constant with the dimension of a power depending on the various design parameters of the device and the properties of the heat transport medium,
B = a potency depending on the physical properties of the medium.
$\Delta T_1$ and $\Delta T_2$ represent the temperature difference across the first wall part and, respectively, the temperature difference across the consumer station.

A device embodying the invention for measuring the stream of a physical magnitude correlating with the mass stream of a medium flowing through a duct is characterized by means for measuring the mass stream, said means comprising a streamline element to be arranged in the duct, means for imparting a predetermined temperature, which may vary across a wall part to a predetermined, thermally active part of the wall of said streamline element, a first temperature sensing member arranged in the thermally undisturbed medium, for example, upstream of the streamline element in the duct for generating a first temperature signal, a second temperature sensing member to be arranged in the medium in the duct thermally affected by said wall part for generating a second temperature signal, means to form and give off a third temperature signal representative of the temperature of the thermally active wall part, means to form and give off signals representative of the physical properties of the medium, means to form a signal representative of the value of the stream from the aforesaid signals and, as the case may be, display means for reproducing said value.

For measuring the heat stream given off or derived by a medium flowing through a duct to or from a consumer station included in said duct such a device may be completed with means to form and give off a fourth temperature signal representative of the temperature upstream of the consumer station, means to form from said signals a signal representative of the value of the heat source and, as the case may be, means for displaying said value.

The streamline element may advantageously form part of a heat pipe activated by a heat source or heat sink. For measuring a heat stream by a device of the kind described above it is preferred to use a part of the heat pipe to be arranged in the duct upstream of the consumer station or at least to be thermally coupled herewith.

Very simple and technically elegant is that variant which is characterized by a second streamline element to be arranged in the duct upstream of the consumer station, which is identical to the first streamline element and is provided with a second wall part forming part of the heat pipe and being identical to the first-mentioned wall part and by means to form and give off a fifth temperature signal representative of the temperature of the heat pipe.

In order to stimulate as much as possible the heat transfer from or to the thermally active wall part it is preferred to provide turbulence generating means for generating a predetermined turbulent stream across the or each active wall part. The turbulence generating means may be designed in the form of a threshold arranged in the direction of flow in front of the wall part concerned or a zone of relatively great, predetermined roughness arranged in the direction of flow in front of the wall part concerned.

The means to form and give off a second temperature signal may be advantageously arranged on a part of the first streamline element consisting of thermally insulating material, that is to say, in the medium not disturbed by the thermally active wall part.

For mounting purposes it is efficient to use that embodiment in which the or each streamline element is, if desired, releasably fastened to a supporting member adapted to fit in the duct concerned. This supporting member may be integral with a duct portion of the duct concerned. This duct portion may, if desired, be of a sectional design for ease of mounting, replacement, cleaning, inspection or the like.

The device described above for measuring the heat stream comprising two identical streamline elements in the inlet duct and the outlet duct respectively of a consumer station can advantageously have the feature that each streamline element is arranged in the associated duct portion, which duct portions are integral with one another and each form a rigidly connecting coupling piece, said elements being adapted to be included in the associated ducts and being manufactured by casting in common with the coupling piece. Preferably the heat pipe extends through the coupling piece.

The invention will now be described more fully with reference to a few arbitrary embodiments. The drawing shows in

Fig. 1 a device for measuring a mass stream and

Fig. 2 a device for measuring a heat stream,

Fig. 3 a cross-sectional view of a further embodiment of a device for measuring a heat stream,

Fig. 4 a sectional view taken on the line IV-IV in Fig. 3,

Fig. 5 a perspective view of a preferred embodiment, the parts of which are shown at some distance from one another for the sake of clarity,

Fig. 6 a sectional view of a further embodiment of a device for measuring a heat stream,

Fig. 7 a front view of the device of Fig. 6,

Fig. 8 a graphic representation of the relationship between the measured temperature difference and the power given off or absorbed by the flowing medium, the medium being a rate parameter and

Fig. 9 an unambiguous calibration graph for a device embodying the invention.

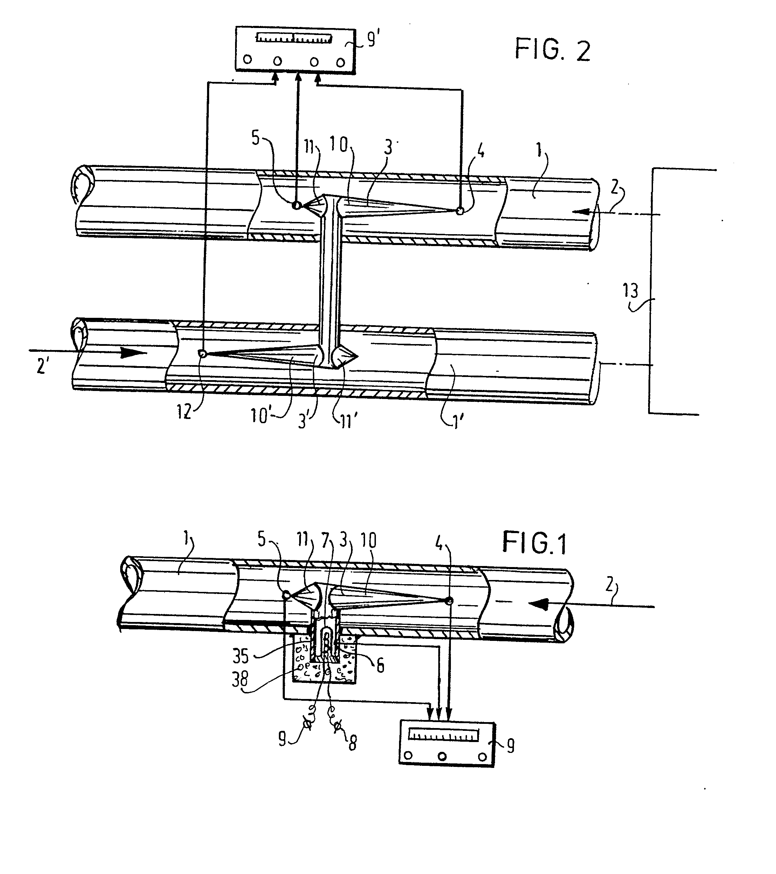

Fig. 1 shows a duct 1 through which flows a medium, for example, a gas, a fluid suspension, an emulsion or the like in the direction indicated by the arrow 2. The duct includes a streamline element 3, to the foremost end of which is fastened a first temperature sensor 4 which is thermally insulated from the streamline element 3. To the rear end of the streamline element 4 is also fastened a thermally insulated, second temperature sensor 5. The streamline element 3 is hollow and forms part of a heat pipe 6. This heat pipe 6 can be activated by an electric heat source 7, which receives electric energy through connecting terminals 8, 9 and which is surrounded by a heat insulating jacket 38. To the heat pipe 6 is fastened a third temperature sensor 35. The output signals of the temperature sensors 4, 5 and 35 are applied to an arithmetic and display unit 9.

The arithmetic and display unit 9 comprises means for adjusting the properties of the medium passing through the duct 1.

The position of the first temperature sensor 4 is not critical. The sole criterion is that it must not be in thermal contact with the wall of the streamline element 3 and has to measure accurately the temperature in the medium upstream element 3.

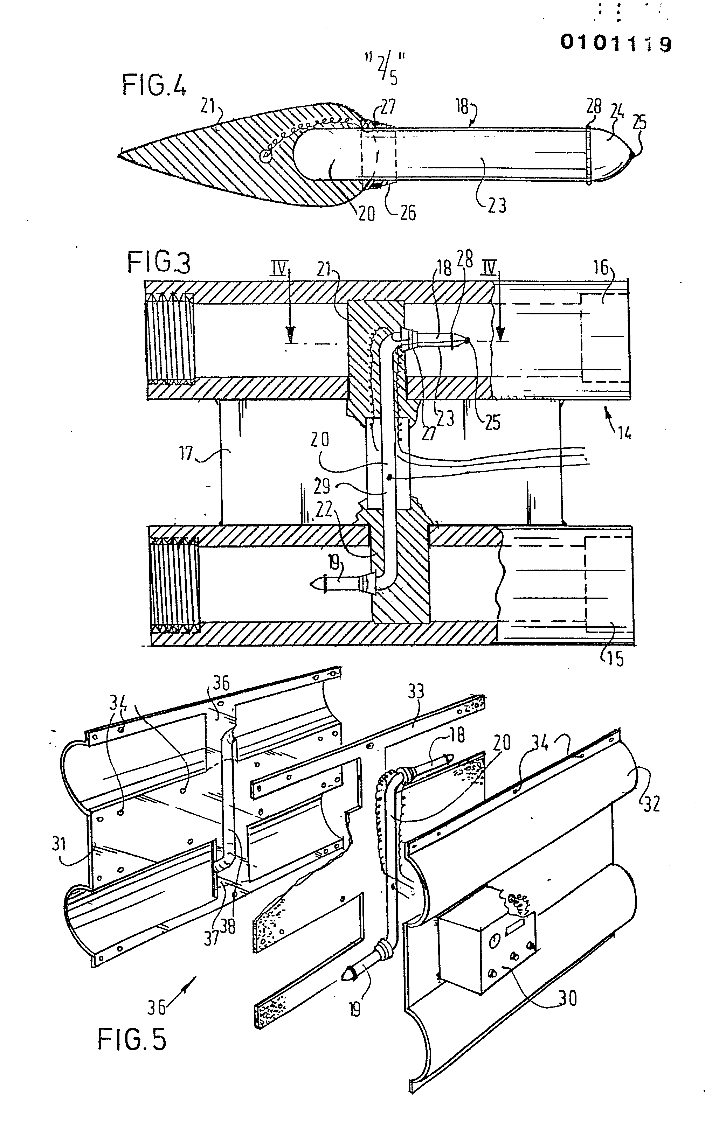

The position of the second temperature sensor 5 has to be chosen so that all medium of the thermal boundary layer, that is to say, the medium layer directly adjacent the wall of the streamline element 3 affects the temperature

0101119

choice is not essential for the satisfactory operation of the heat pipe 6'. The symmetrical design shown could, however, have in practice the advantage that the thermal balance can hardly be disturbed by ageing, lime deposits, corrosion or the like. With reference to Fig. 3 it will be discussed how technical advantage can be derived from a symmetrical configuration.

The output signals of the first temperature sensor 4, the second temperature sensor 5, the third temperature sensor 12 and the fourth temperature sensor 35 fastened to the heat pipe are applied to an arithmetic and display unit 9' which furthermore comprises adjusting means for setting the properties of the medium and the characteristic temperature of the heat pipe 6'. The extension of the device shown in Fig. 2 as compared with that of Fig. 1 can be considered to reside in that apart from the mass stream the temperature difference across a consumer station 13 is measured by assessing the temperature difference between the third temperature sensor 12 and the first temperature sensor 4. Together with the mass stream of the medium this temperature difference provides the information for measuring the heat stream to or from the consumer station.

Needless to say that, if desired, the unit 9, 9' may be provided with means for setting the active cross-section of the duct 1, 1'. Moreover, the device embodying the invention may comprise a duct portion or a set of duct portions of known cross-section so that the said additional setting means can be dispensed with.

An interesting aspect of the device shown in Fig. 2 is that the heat pipe 6' may have a relatively great length without adversely affecting the measuring accuracy and without excessive increase in dissipation. In the case in which the ducts 1, 1' are spaced apart by a considerable distance or occupy a position differing from the parallel position the heat pipe 6' may even be flexible. It will be obvious that this appreciably facilitates mounting of the device embodying the invention and provides great flexibility sensor 5, whereas the temperature sensor 5 must not be subjected to a temperature rise or temperature drop of the passing medium not heated or cooled by the streamline element 3.

The shape of the streamline element 3 shown in Fig. 1 having a relatively pointed front part 10 and a relatively blunt rear part 11 is only a schematic embodiment.

Fig. 2 shows a device for measuring a heat stream given off or absorbed by a medium flowing through a duct to and from a consumer station respectively 13. The heating or cooling medium is supplied through an inlet duct 1', through which it flows in the direction indicated by the arrow 2'. The outlet occurs through the outlet duct 1 in the direction indicated by the arrow 2. This outlet duct 2 includes a streamline element 3 having a front part 10 and a rear part 11, to which are fastened a temperature sensor 4 and 5 respectively in the same manner as described with reference to Fig. 1. The streamline element 3 shown in Fig. 2 forms part of a heat pipe 6', the other end of which is provided with a second streamline element 3' having a front part 10' and a rear part 11'. To the foremost end of the front part 10' is fastened a thermally insulated, third temperature sensor 12 for measuring the temperature of the supplied medium. The heat pipe 6' is activated by the temperature difference between the medium in the ducts 1 and 1'. Owing to the resultant energy stream the wall of the streamline element 3 obtains a given temperature with a correct choice of the nature and the degree of filling of the heat pipe in the same manner as described with reference to Fig. 1. Therefore, the streamline element 3' of Fig. 2 may be compared to the heat source 7 of Fig. 1. In this respect it should be noted that instead of using a heat source 7, a heat sink or a cooling element may be employed. By adapting the arithmetic unit 9 the same results may be obtained herewith as with a heat source. However, a heat source is preferred with regard to the higher degree of efficiency thereof.

From Fig. 2 it is apparent that the shape of the streamline element 3' is identical to that of the streamline element 3. From the foregoing it will be obvious that this The symmetric shape shown in Fig. 2 is, as state above, not essential for a satisfactory operation. In the case of, for example, a conventional metal, that is to say, thermally good conducting duct 1', there may be used an element being in good thermal contact with the outer wall, said element being, in turn, perfectly coupled thermally with the heat pipe 6'.

Fig. 3 shows a device 14 for measuring a heat stream. This device comprises an inlet duct portion 15, an outlet duct portion 16 intended to be included in an inlet duct and an outlet duct respectively to and from a consumer station respectively, a coupling piece 17 interconnecting the duct portions 15 and 16, a first streamline element 18 coaxially arranged inside the outlet duct portion 16, a second streamline element 19 coaxially arranged inside the inlet duct portion 15 and a heat pipe 20 extending through the coupling piece 17 and connecting the two streamline elements 18 and 19.

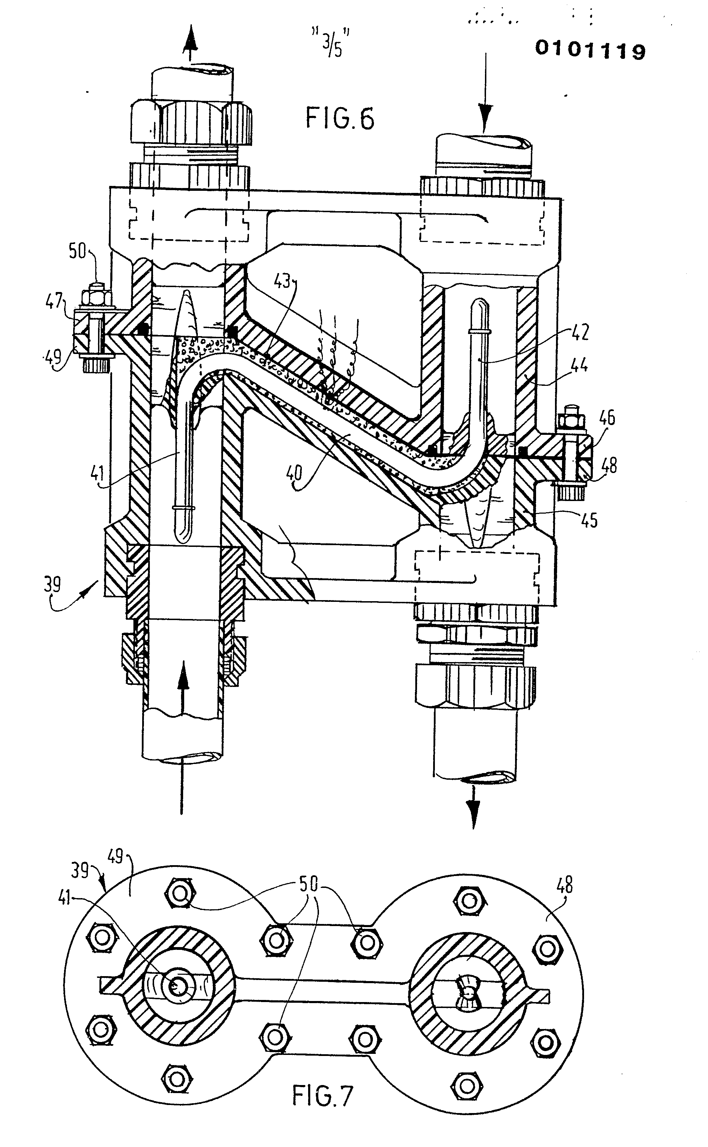

The streamline elements 18 and 19 extend furthermore through a diagonal partition 21 and 22 respectively having a streamline shape as shown in detail in Fig. 4.

Since the device 14 is symmetrical, only the structure of the first streamline element 18 will be described with reference to Fig. 4. With the exception of a detail to be described hereinafter the streaming element 19 is fully identical.

The streamline element 18 comprises a thermally active wall part 23, which is connected with the heat pipe 20. The foremost end of the streamline element 18 has a dome 24 of thermally insulating material, the end of which is provided with a first temperature sensor 25. This temperature sensor 25 measures the temperature of the medium not yet influenced by the wall part 23.

At the other end of the thermally active wall part 23 there is arranged a ring 26 of thermally insulating material matching the streamline shape of the streamline element 18 and of the diagonal partition 21 with an annular, second temperature sensor 27. Between the thermally active active wall part 23 and the dome 24 there is arranged an uninterrupted, annular wire 28 which ensures a satisfactory turbulence of passing medium along the active wall part 23.

To the heat pipe 20 is fastened a third temperature sensor 29, which measures the temperature of the heat pipe.

The external shape of the first streamline element 18 is accurately equal to that of the second streamline element 19. However, the streamline element 19 does not have a temperature sensor, since in view of the accurately symmetrical configuration the heat pipe sets to a temperature equal to the average between the inlet temperature and the outlet temperature measurement of the inlet temperature may be replaced by the measurement of the heat pipe temperature by means of the temperature sensor 29 in conjunction with the measurement of the outlet temperature by means of the first temperature sensor 25 already available.

Signals emanating from the temperature sensors 25, 27 and 29 are applied to an arithmetic and display unit 30 shown in Fig. 5. This unit is arranged for calculating and displaying the heat stream on the basis of said three temperature signals.

Fig. 5 shows a device 36 in a preferred embodiment in a perspective view. The various components are shown at a distance from one another. The device 14 comprises two spray-cast specularly symmetrical parts 31 and 32. These parts can be interconnected with the interposition of a gasket 33 by bolts (not shown) through holes 34. On their inner faces the parts 31, 32 have a depression 35 matching the shape of the heat pipe for accommodating the heat pipe and the carrier of the streamline elements 18, 19 connected therewith. Diagonal carrying partitions 36, 37 are integral with the parts 31 and 32. It is apparent that also these partitions 36, 37 are sectioned, one half forming part of the part 31 and the other half of the part 32. Only after assembling the shape shown in Fig. 4 is obtained.

The part 32 is provided with the arithmetic and display unit 30.

Fig. 6 shows a device 39 embodying the invention. In contrast to the device shown in Fig. 3 the device 39 has the particular feature that the heat pipe 40 together with the streamline elements 41, 42 has generally the shape of a Z. With respect to the embodiment of Fig. 3 the device of Fig. 6 has the advantage that the overall axial length may be smaller. It is furthermore noted that in contrast to the embodiment of Fig. 3 the device 39 is divided in a transverse direction along a plane 43. The two component ducts and coupling pieces 4, 45 have flange parts 46, 47 and 48, 49 which are interconnected by bolts 50 in medium sealing fashion. The design of Fig 6 has the advantage over that of Fig. 3 that the device 39 can be more readily manufactured by pressing techniques from two halves so that thermo-hardeners can be used, which allows a larger temperature range. It is furthermore noted that in this embodiment the pressure of the transported heat transport medium loads the connection solely axially, which load can be more easily absorbed whilst maintaining a satisfactory seal of the load exerted by the medium on the device in the embodiment of Fig. 3.

Fig. 7 is a front view of the device 39.

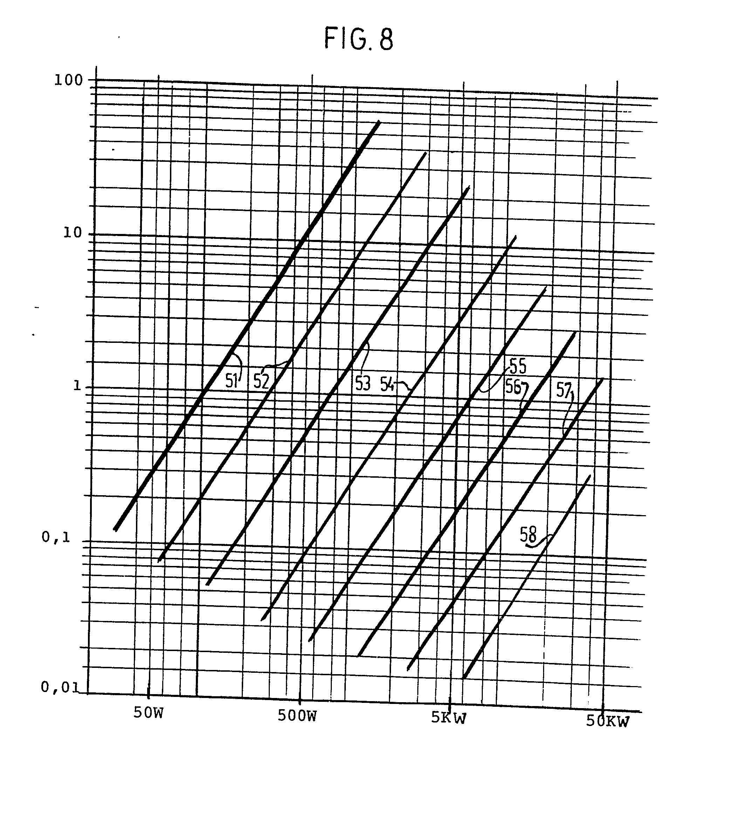

Fig. 8 shows a graph, on the abscissa of which is plotted the power derived by the consumer station 13 of Fig. 2 from the heat transport medium. The ordinate indicates the difference between the temperature of the first temperature sensor 4 and the second temperature sensor 5 of Fig. 2. Eight curves are shown designated by reference numerals 51, 52, 53, 54, 55, 56, 57 and 58. On a logarithmic scale they appear to be straight lines and correspond to rates of 0,5, 1, 2, 3, 6, 9, 12 and 15 litres/minute. On the basis of these results it need not be proved that only a relatively simple arithmetic unit is required to calibrate the rate as a parameter so that an unambiguous relationship is obtained between the temperatures across the boundary layer.

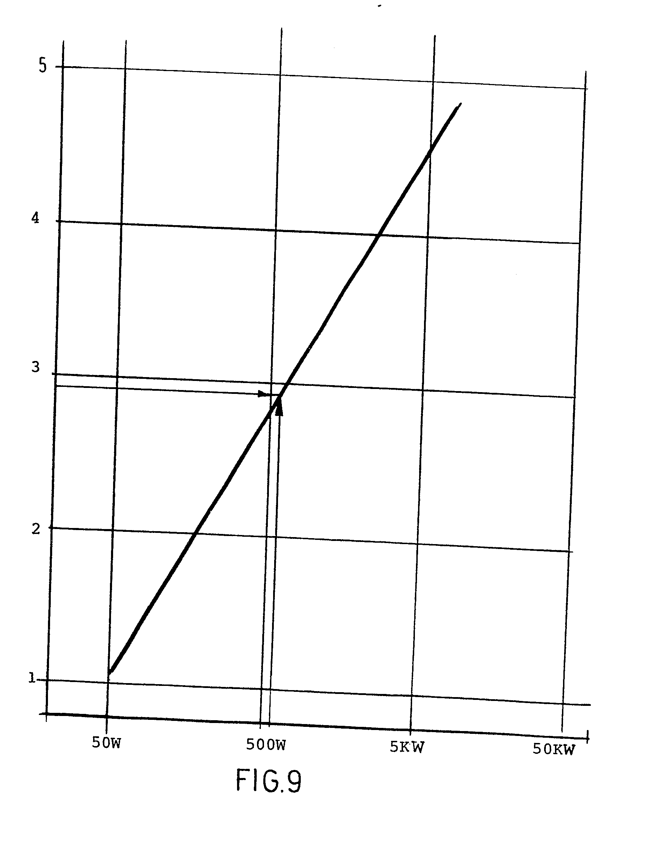

Fig. 9 shows a standardized form of the graphic representation of Fig. 8. The standardized form is obtained by dividing the temperature difference across the boundary layer, which is plotted on the ordinate in Fig. 8, by the difference between the temperatures assessed by the temperature sensor 12 of Fig. 2 and the temperature sensor 4 of Fig. 2 or else the input temperature of the consumer station 13 and the output temperature thereof. The abscissa of Fig. 9 indicated again the power on a logarithmic scale, whereas the ordinate indicates the said ratio between the two temperature differences. It will be obvious that the results also depend on the various design parameters of the device embodying the invention and the physical properties of the medium. Therefore, the graph of Fig. 9 is plotted only for one specific device and may have another shape for differently constructed devices and other media. The object of Fig. 9 only is explain in this connection that by using two measurements, i.e. two temperature differences it can be unambiguously assessed which heat stream is derived from a medium by a consumer station or supplied thereto.

It has been empirically found that the relationship illustrated in Fig. 9 satisfies the following analytic relation:

$$P = A\left(\frac{T_5 - T_4}{T_{12} - T_4}\right)^B$$

wherein P = the power expressed in Watt,

A = a constant of the dimension Watt depending on the design parameters and substance constants, among which those of the medium and

B = a potency depending on the physical properties of the medium.

It is noted that the extraordinarily simple relationship according to the above equation provides the possibility of construction the arithmetic and display unit 9' in a very simple manner.

It is furthermore noted that the simple relationship is obtained by utilizing the superior properties of the heat pipe in the scope of the invention.

Finally it is noted that, as is explained in the foregoing, a measurement of the two temperature differences can be used. This may be directly carried out by means of, for example, thermo-elements.

The configuration shown in Figs. 2, 3 and 6 has the great advantage that hardly any trouble will be caused by fouling which may occur in the course of time. Without exposing details it can be said that in the configuration shown the specific distribution of the so-called Nusselt number is concerned here rather than a fixed number, which distribution does not or only hardly change due to soiling, corrosion and so on so that great accuracy is ensured not only for a short term but also for a long term.

The invention is not limited to these two embodiments. It will be obvious that a great many adaptations of the design and modifications also of the relationship between the various components mentioned are possible within the scope of the invention.

CLAIMS

1. A method of measuring the stream of a physical magnitude correlated with the mass stream of a medium flowing through a duct characterized in that the mass stream is measured by arranging a streamline element in the medium, by imparting to at least one predetermined, thermally active part of the wall of said streamline element a predetermined temperature which may vary along said wall part, by measuring the temperature of the medium in the thermally undisturbed medium, for example, upstream of the streamline element, by measuring the temperature of the medium thermally affected by said wall part and by assessing the mass stream from said temperatures and the physical properties of the medium.

2. A method of measuring of the heat stream given off or derived by a medium flowing through a duct to or from, respectively, a consumer station included in said duct characterized in that the mass stream is measured by the method claimed in Claim 1, the temperature difference of the medium upstream and, respectively, downstream of the consumer station is measured and subsequently the heat stream is assessed from the mass stream, the temperature difference and the physical properties of the medium.

3. A method as claimed in anyone of Claim 1 or 2 characterized in that the thermally active wall part of the

0101119

streamline element forms part of a heat pipe activated by a heat source or a heat sink.

4. A method as claimed in Claims 2 and 3 characterized in that as a heat source or a heat sink the medium upstream of the consumer station is used.

5. A method as claimed in Claim 4 characterized in that the temperature is assessed upstream of the consumer station by arranging a streamline element identical to the first streamline element and having a second wall part forming part of the heat pipe and being identical to the first-mentioned wall part in the medium upstream of the consumer station, said second wall part serving to transfer heat between the medium and the heat pipe and having a heat transfer coefficient equal to the heat transfer coefficient of the first wall part, in that the temperature difference across the first wall part is measured, the temperature difference of the medium upstream and downstream respectively of the consumer station is measured and the ratio between the two temperature differences is assessed, said ratio between representative of the power absorbed or, respectively given off by the consumer station.

6. A device for measuring the stream of a physical magnitude correlated with the mass stream of a medium flowing through a duct characterized by means for measuring the mass stream, said means comprising

a streamline element to be arranged in the duct,

means for imparting to a predetermined, thermally active part of the wall of said streamline element a predetermined temperature, which may vary across said wall part,

a first temperature sensing member to be arranged in the thermally undisturbed medium, for example, upstream of the streamline element in the duct for generating a first temperature signal,

a second temperature sensing member in the medium thermally affected by said wall part in the duct for generating a second temperature signal,

means for forming and giving off a third temperature signal representative of the temperature of the thermally active wall part,

means for forming and giving off signals representative of the physical properties of the medium,

means for forming a signal representative of the value of the stream from said signals and, as the case may be,

display means for displaying said value.

7. A device for measuring a heat stream given off or derived by a medium flowing through a duct to or, respectively, from a consumer station included in said duct characterized by

a device as claimed in Claim 6,

means for forming and giving off a fourth temperature signal representative of the temperature upstream of the consumer station,

means forming a signal representative of the value of the heat stream from said signals and, as the case may be,

display means for displaying said value.

8. A device as claimed in Claim 6 or 7 characterized in that the thermally active wall part forms part of a heat pipe activated by a heat source or heat sink.

9. A device as claimed in Claim 7 or 8 characterized by a part of the heat pipe to be arranged upstream of the consumer station in the duct or at least thermally coupled herewith.

10. A device as claimed in Claim 9 characterized by a second streamline element to be arranged in the duct upstream of the consumer station, which element is identical to the first streamline element and is provided with a second wall part being identical to the first-mentioned wall part and forming part of the heat pipe and by means for forming and giving off a fifth temperature signal representative of the temperature of the heat pipe.

11. A device as claimed in anyone of Claims 6 to 10 characterized by turbulence generating means for generating a predetermined turbulent stream along the or each active wall part.

12. A device as claimed in Claim 11 characterized by a threshold arranged in front of the wall part concerned viewed in the direction of flow.

13. A device as claimed in Claim 11 characterized by a zone of relatively great, predetermined roughness arranged in front of the wall part concerned, viewed in the direction of flow.

14. A device as claimed in anyone of Claims 6 to 13 characterized in that the means for forming and giving off the second temperature signal are arranged on a part of the first streamline element consisting of thermally insulating material in the medium undisturbed by the thermally active wall part.

15. A device as claimed in anyone of Claims 6 to 14 characterized in that the or each streamline element is fastened, if desired in a releasable manner, to a supporting member fitting in the duct concerned.

16. A device as claimed in Claim 15 characterized in that the supporting member is integral with a duct portion to be included in the duct concerned.

17. A device as claimed in Claim 16 characterized in that the duct portion is a sectional portion.

18. A device as claimed in Claims 10 to 16 characterized in that each streamline element is arranged in an associated duct portion, said duct portions being integral with one another and forming a coupling piece rigidly coupling both duct portions and being adapted to be included in the ducts concerned, said portions being manufactured together with the coupling piece by casting.

19. A device as claimed in Claim 18 characterized in that the heat pipe extends across the coupling piece.

"1/₅"

FIG. 2

FIG.1

0101119

FIG.4

"2/5"

FIG.3

FIG.5

FIG.6

FIG.7

" 4/5 "

## FIG. 8

FIG.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-2 330 498 (P. NENNING)<br><br>* Page 4, paragraph 1; page 13, paragraph 2; figures; page 14, last paragraph - page 19, last paragraph * | 1,2,4-8,10,11 | G 01 F 1/78<br>G 01 F 1/68<br>G 01 K 17/16 |
| X | WO-A-8 002 071 (R.H. BEUSE et al.)<br><br>* Figure 3d; figure 1A; page 11, lines 8-20; page 14, lines 1-20 * | 1,2,4-7,18,19 | |
| X | FR-E- 95 475 (J. HARBON et al.)<br>* Whole document * | 1 | |
| A | CH-A- 607 001 (L. ENFOUR et al.)<br>* Figures 1,2; page 1, column 1, lines 1-63 * | 1,2,4 | TECHNICAL FIELDS SEARCHED (Int. Cl. ³)<br><br>G 01 F<br>G 01 K |
| A | US-A-4 067 237 (F.G. ARCELLA)<br>* Column 1, lines 5-36; figures * | 3,8 | |

The present search report has been drawn up for all claims

| Place of search<br>THE HAGUE | Date of completion of the search<br>09-11-1983 | Examiner<br>NUIJTEN E.M. |
|---|---|---|